# EUROPÄISCHE PATENTANMELDUNG

(11) **EP 1 500 632 A1**
(43) Veröffentlichungstag der Anmeldung: **26.01.2005**
(21) Anmeldenummer: 04015590.5
(22) Anmeldetag: 02.07.2004
(51) Int. Cl.: C03B 7/10

(54) **Vorrichtung zum Abtrennen von Glasposten**

(30) Priorität: 19.07.2003 DE 20311112 U
(71) Anmelder: Heye International GmbH, 31683 Obernkirchen (DE)
(72) Erfinder: Hermening, Heinz, 32457 Porta Westfalica (DE); Winkelhake, Dirk, 31688 Nienstädt (DE)
(74) Vertreter: Callies, Rainer

(57) **Zusammenfassung**

Die Erfindung betrifft eine Vorrichtung (1) zum Abtrennen von Posten von einem oder mehreren Strängen aus schmelzflüssigem Glas, bei der das Abtrennen jedes Postens durch ein Scherblattpaar (2,3) erfolgt, wobei ein Scherblatt (4,5,6,7) jedes Scherblattpaars (2,3) an einem zugehörigen Scherenarm (8,9) angeordnet ist, beide Scherenarme (8,9) an einer gemeinsamen Säule (10) der Vorrichtung (1) frei schwenkbar gelagert sind, an jedem Scherenarm (8,9) im Abstand von der Längsachse (11) der Säule (10) eine Schubstange (17,18) angelenkt ist, jede Schubstange (17,18) andererseits an einem Kurbelzapfen (19, 20) einer zugehörigen Kurbel (21,22) angelenkt ist und die beiden Kurbeln (21,22) durch eine Antriebseinrichtung (29) synchron zueinander und voneinander schwenkend antreibbar sind. Dadurch, dass jede Kurbel (21,22) koaxial mit einem Zahnrad (23,24) verbunden ist und die beiden Zahnräder (23,24) durch einen gemeinsamen Antrieb (30) der Antriebseinrichtung (29) gegensinnig drehend antreibbar sind, beansprucht die Antriebseinrichtung wenig Platz.

## Beschreibung

Die Erfindung betrifft eine Vorrichtung nach dem Oberbegriff des Anspruchs 1.

Bei einer aus dem deutschen Gebrauchsmuster G 94 11 572.9 bekannten Vorrichtung dieser Art sind beide Scherenarme jeweils durch einen eigenen, gesonderten Antrieb der Antriebseinrichtung antreibbar. Eine solche Antriebseinrichtung ist relativ aufwändig und beansprucht relativ viel Platz.

Der Erfindung liegt daher die Aufgabe zugrunde, eine vereinfachte gattungsgemäße Vorrichtung mit einer wenig Platz beanspruchenden Antriebseinrichtung zur Verfügung zu stellen.

Diese Aufgabe ist durch die Merkmale des Anspruchs 1 gelöst. Beide Scherenarme schwenken um eine gemeinsame Schwenkachse. Auf diese Weise ist zum einen der Aufwand und zum anderen der Verschleiß gering gehalten. Dadurch, dass jede Kurbel koaxial mit jeweils einem Zahnrad verbunden ist und die beiden Zahnräder durch einen gemeinsamen Antrieb der Antriebseinrichtung gegensinnig drehend antreibbar sind, bedarf es für die Antriebseinrichtung nur relativ wenig Platz. Zudem kann die erforderliche Synchronisation der Bewegung der beiden Scherblätter auf einfache Weise erreicht werden. Die Antriebseinrichtung ist gegenüber der bekannten Antriebseinrichtung, die jeweils einen Antrieb für jeden der beiden Scherenarme aufweist, vereinfacht.

Es kann vorgesehen sein, dass die Zahnräder mit unveränderter, gegensinniger Drehrichtung gedreht werden, wobei die Drehgeschwindigkeit moduliert wird, d.h. die Drehgeschwindigkeit innerhalb jeder Umdrehung des Zahnrades einem vorgegebenen Änderungsprofil unterworfen ist. Dabei ändert sich die Drehgeschwindigkeit zwischen einer Minimalgeschwindigkeit, die gleich Null sein kann, und einer Maximalgeschwindigkeit. Es kann aber auch vorgesehen sein, dass die beiden Zahnräder durch den gemeinsamen Antrieb der Antriebseinrichtung gegensinnig hin und her drehend antreibbar sind.

Vorzugsweise handelt es sich bei den Zahnrädern jeweils um ein Schneckenrad, welches mit einer Schnecke zusammenwirkt, die durch den Antrieb der Antriebseinrichtung, gegebenenfalls mit Geschwindigkeitsmodulation, antreibbar ist.

Insbesondere kann der Antrieb der Antriebseinrichtung einen Elektroservomotor aufweisen, der koaxial mit der Schnecke angeordnet ist.

Es kann auch vorgesehen sein, dass der Antrieb einen Elektroservomotor aufweist, der unter einem vorzugsweise rechten Winkel zu der Schnecke angeordnet ist. Diese Anordnung kann aus Gründen der Platzersparnis vorteilhaft sein.

Wenn eine Modulation der Drehgeschwindigkeit der beiden Zahnräder vorgesehen ist, kann die Vorrichtung so ausgelegt sein, dass der Elektroservomotor mittels einer Software so angesteuert wird, dass er eine entsprechend modulierte Umdrehungsgeschwindigkeit aufweist.

Wenn der Elektromotor in einem Winkel zu der Schnecke angeordnet ist, kann vorgesehen sein, dass eine Welle der Schnecke zu einer Seite hin eine Verlängerung aufweist, die sich durch ein Gehäuse des Winkelgetriebes hindurch erstreckt und Mittel zum Drehen von Hand aufweist. Auf diese Weise kann eine Bewegung der Scherenarme von Hand vorgenommen werden, wenn der Antrieb oder die Energieversorgung ausgefallen ist.

Vorzugsweise ist der Antrieb auf einem Schlitten angeordnet, der so beschaffen ist, dass mit einer Verschiebung des Schlittens eine Relativschwenkung der Scherenarme zueinander ausgeführt wird. Durch den Schlitten kann der Arbeitshub der Scherenarme minimal gehalten und dadurch einerseits Antriebsenergie gespart und andererseits die maximal mögliche Betriebsgeschwindigkeit gesteigert werden. Andererseits gestattet der Schlitten eine recht einfache und schnelle Öffnung der Scherenarme über die zum Arbeitshub gehörende offene Arbeitsstellung hinaus. Diese weitere Öffnung ist zum Beispiel dann wünschenswert, wenn Wartung oder Austausch an dem Tropfring des Speiserkopfes vorzunehmen sind. Der Tropfring und seine Umgebung können dann für Servicezwecke schnell und einfach frei zugänglich gemacht werden. Eine Öffnung der Scherenarme kann auch bei Ausfall des Antriebs selbsttätig erfolgen. Dazu erteilt eine Steuerung des Antriebs einer weiteren Steuerung für den Rückziehantrieb des Schlittens einen Startimpuls. Die Scherenarme bleiben dann in einer offenen Sicherheitsstellung, bis der Schaden an dem Antrieb oder der Energieversorgung behoben ist. Auf diese Weise können die Scherblätter nicht mit den Glassträngen kollidieren.

Vorzugsweise ist der Schlitten in einer Ebene verschiebbar, die die Längsachse der Säule senkrecht schneidet, wobei die Verschiebung entlang der in dieser Ebene liegenden Geraden stattfindet, welche die Längsachse der Säule und die Längsachse der Glasstränge schneidet. Auf diese Weise ist eine besonders platzsparende Ausbildung der Vorrichtung errreicht.

Vorzugsweise wird zur Verschiebung des Schlittens wenigstens eine pneumatische Kolben-Zylinder-Einheit eingesetzt, die einerseits an dem Schlitten und andererseits vorrichtungsfest angeschlossen ist. Dies sorgt für eine schnelle und doch schonende Betätigung der Mechanismen.

Vorzugsweise sind Mittel zur Justierung einer Ruheposition des Schlittens vorgesehen. Die Ruheposition des Schlittens ist die Position, die der Schlitten gleichbleibend inne hat, wenn die Scherblattpaare ihre normale Arbeitsbewegung ausführen. Durch eine Justierung der Ruheposition des Schlittens kann der Scherblattüberschnitt in der Scherposition der Scherenarme eingestellt werden. Insbesondere können die Justierungsmittel ein vorrichtungsfestes Stück aufweisen, das in Richtung des Schlittens konisch ausgebildet ist, und ferner zwei keilförmige Klötze, die, während sie an Flanken des Konusstücks anliegen, mittels einer an dem Schlitten befestigten Spindel verschiebbar sind. Die Spindel kann von Hand drehbar sein. Alternativ kann vorgesehen sein, dass die Justierungsmittel ein vorrichtungsfestes Konusstück, das in Richtung des Schlittens konisch mit Flanken ausgebildet ist, und keilförmige Klötze, die an den Flanken des Konusstücks anliegend mittels einer ortsfest befestigten Spindel verschiebbar sind, aufweisen, wobei die Klötze, mittels der Spindel in Bewegungsrichtung des Schlittens verschiebbare Anschlagflächen für den Schlitten bilden.

Diese und weitere Merkmale und Vorteile der Erfindung werden nachfolgend anhand zweier in den Zeichnungen dargestellten Ausführungsbeispiele näher erläutert. Es zeigen:
Fig. 1 eine Untersicht auf eine Vorrichtung mit zwei Scherblattpaaren, wobei ein Scherenarm in geöffneter Arbeitsstellung und ein Scherenarm in geschlossener Arbeitsstellung dargestellt ist,
Fig. 2 die Vorrichtung der Fig.1 in teilweiser Schnittansicht im Wesentlichen gemäß der Linie II-II in Fig. 1,
Fig. 3 die Vorrichtung der Fig. 1 in teilweiser Schnittansicht im Wesentlichen gemäß der Linie III-III in Fig. 2,
Fig. 4 eine Untersicht auf einen Teil einer weiteren Ausführungsform der Vorrichtung ,
Fig. 5 die Vorrichtung der Fig.4 in teilweiser Schnittansicht im Wesentlichen gemäß der Linie V-V in Fig. 4 und,
Fig. 6 die Vorrichtung der Fig. 4 in teilweiser Schnittansicht im Wesentlichen gemäß der Linie VI-VI in Fig. 5.

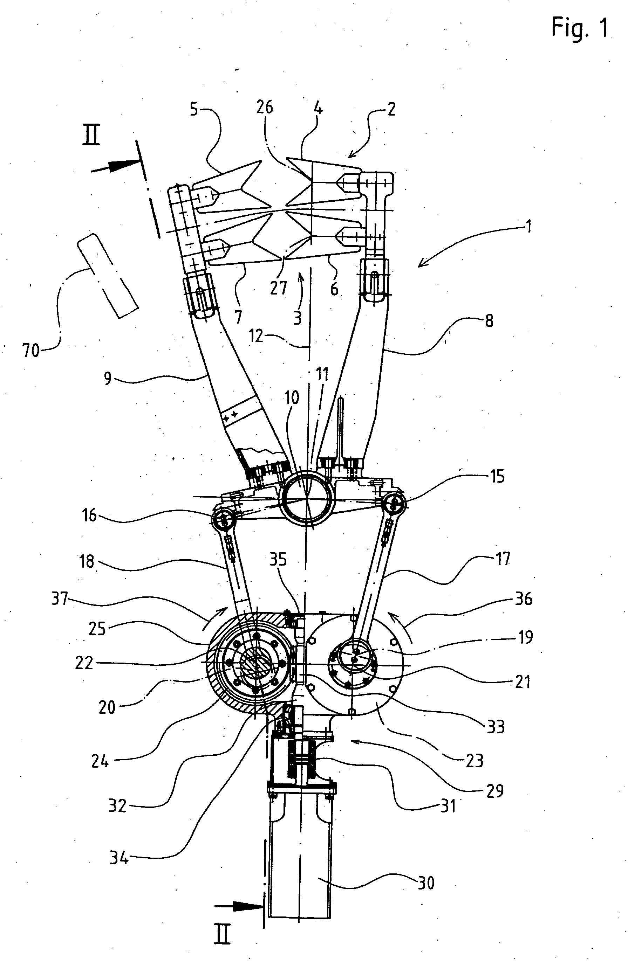

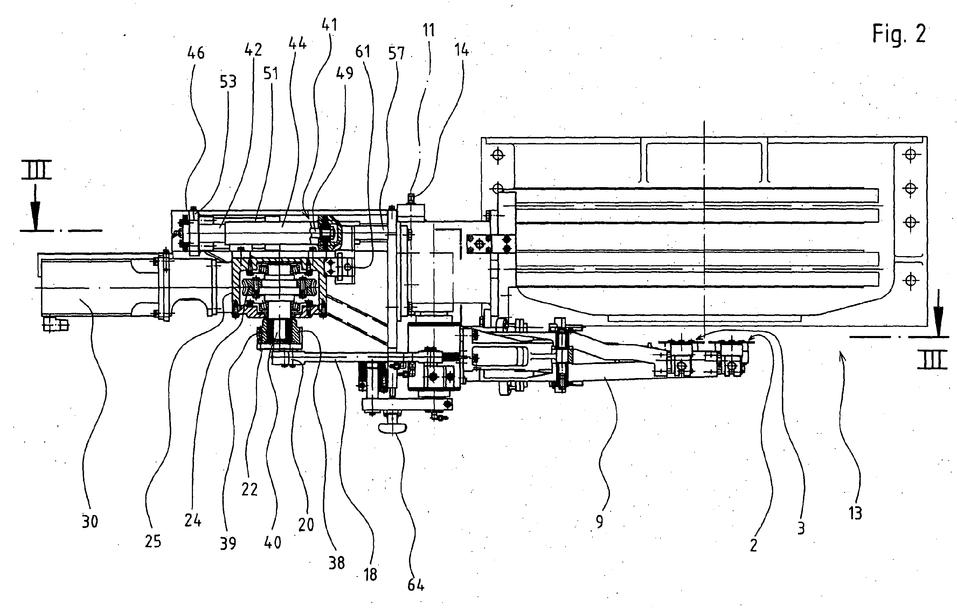

Fig. 1 zeigt eine Vorrichtung 1 zum Abtrennen von Posten von zwei Strängen (nicht gezeigt) aus schmelzflüssigem Glas. Die Stränge treten aus Bodenöffnungen (nicht gezeigt) eines an sich bekannten Speiserkopfes 13 (siehe Fig. 2) aus. Das Abtrennen jedes Postens erfolgt durch jeweils ein Scherblattpaar 2 und 3 mit Scherblättern 4, 5 bzw. 6, 7.

Je ein Scherblatt 4, 6 bzw. 5,7 jedes Scherblattpaars 2, 3 ist an einem zugehörigen Scherenarm 8 und 9 lösbar befestigt. Die Scherenarme 8, 9 sind an einer gemeinsamen Säule 10 mit einer Längsachse 11 koaxial zueinander frei schwenkbar gelagert. Die Scherenarme können zusammen mittels eines Vierkants 14 in ihrer Höhe verstellt werden. Die Stränge aus schmelzflüssigem Glas weisen Längsachsen 26 und 27 auf, die parallel zu der Längsachse 11 ausgerichtet sind. Die Längsachsen 26, 27 der Glasstränge und die Längsachse 11 liegen in einer senkrechten Ebene 12.

In einem radialen Abstand von der Längsachse 11 ist an jedem Scherenarm 8, 9 an einem Anlenkpunkt 15 bzw. 16 jeweils eine Schubstange 17 und 18 angelenkt, deren anderes Ende jeweils an einen Kurbelzapfen 19 bzw. 20 von Kurbeln 21 und 22 angeschlossen ist. Jede Kurbel 21, 22 ist koaxial mit einem Schneckenrad 23 bzw. 24 verbunden. Wie aus Fig. 2 ersichtlich ist, ist die Kurbel 22 mit einer Hülse 38 durch einen Spannsatz 39 auf einer Welle 40 des Schneckenrades 24 befestigt. Die Kurbeln 21, 22 und die Schneckenräder 23, 24, die in einem Gehäuse 25 angeordnet sind, sind Bestandteil einer als Elektroservoantrieb ausgebildeten Antriebseinrichtung 29.

Die Antriebseinrichtung 29 weist einen Elektroservomotor 30 auf, welcher eine durch eine Kupplung 31 angeschlossene Schneckenwelle 32 mit einer Schnecke 33 antreibt: Die Schneckenwelle 32 ist in Wälzlagern 34 und 35 gelagert. Die Schnecke 33 steht im Eingriff mit den Schneckenrädern 23, 24. Die Schnecke 33 treibt die Kurbeln 21, 22 in entgegengesetzten, gleichbleibenden Drehrichtungen, die durch die Pfeile 36 und 37 dargestellt sind, drehend an. Dabei ist für den Scherenarm 9 eine offene Arbeitsstellung dargestellt, die einer äußeren Extremstellung des Kurbelzapfens 20 entspricht, während für den Scherenarm 8 die Scherposition dargestellt ist. Wenn sich die Scherblattpaare 2, 3 mit leichter Überlappung der zusammengehörenden Scherblätter 4, 5 bzw. 6, 7 schließen, wird von den Strängen des schmelzflüssigen Glases jeweils ein Posten abgetrennt und einer zugehörigen Glasformmaschine zugeführt. Die Drehgeschwindigkeit der Kurbeln 21, 22 ist durch eine vorgegebene modulierte Umdrehungsgeschwindigkeit des Elektroservomotors 30 moduliert. Die Modulation ist auf den jeweiligen Anwendungsfall, z.B. in Abhängigkeit der Tropfengröße, ausgerichtet. So kann beispielsweise die Drehgeschwindigkeit der Kurbeln 21, 22 in der Scherposition verlangsamt sein.

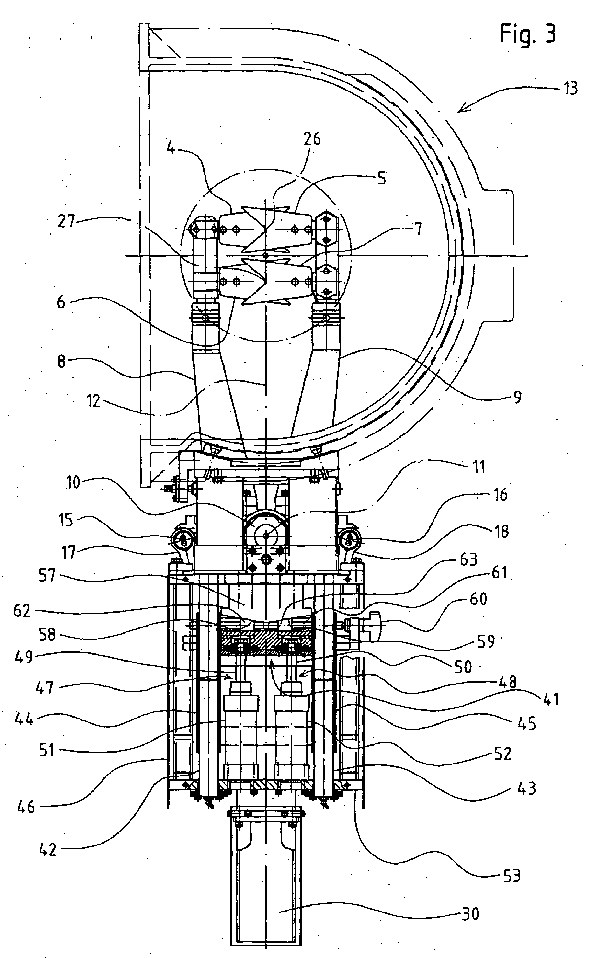

Die Antriebseinrichtung 29 ist an einem Schlitten 41 (siehe Fig. 2 und 3) angeordnet. Der Schlitten 41 kann über Führungshülsen 44 und 45, die auf vorrichtungsfesten, an einem Rahmen 46 befestigten Führungsstangen 42 und 43 verschiebbar sind, bewegt werden. Die Verschiebung des Schlittens 41 erfolgt in einer zu der Ebene 12 bzw. zu der Längsachse 11 der Säule 10 senkrechten Ebene, und zwar entlang der in dieser Ebene liegenden Geraden, die die Längsachse 11 der Säule 10 und die Längsachsen 26, 27 der Glasstränge schneidet.

Der Schlitten 41 ist mittels zweier pneumatischer Kolben-Zylinder-Einheiten 47 und 48 verschiebbar. Eine jeweilige Kolbenstange 49 bzw. 50 der Kolben-Zylinder-Einheiten 47 und 48 ist beweglich angeschlossen, während jeweils ein Zylinder 51 bzw. 52 an einer Kopfplatte 53 des Rahmens 46 befestigt ist. Der Überschnitt der Scherblätter 4 und 5 bzw. 6 und 7 wird durch eine Justierung des Schlittens 41 bewirkt. Als Mittel zur Justierung der Ruheposition des Schlittens 41 ist ein vorrichtungsfestes Konusstück 57 mit zwei Flanken 58 und 59 vorgesehen. Mittels einer über ein Handrad 60 betätigbaren Spindel 61 können keilförmige Klötze 62 und 63, die auf Spindelabschnitten mit einem Rechts- bzw. Linksgewinde angeordnet sind, entlang der Flanken 58 bzw. 59 bewegt werden. Die Spindel 61 und die Klötze 62 und 63 sind Bestandteile des Schlittens 41. Je nach Drehrichtung der Spindel 61 bewegen sich die beiden Klötze 62 und 63 entweder nach innen oder nach außen, wodurch der Schlitten 41 geringfügig in der Zeichenebene der Fig. 3 verschoben wird.

Zusätzlich zu dem Scherblattüberschnitt können auch die beiden Scherblätter 4 und 5 bzw. 6 und 7 in ihrem Abstand zueinander in Richtung der Längsachsen 26, 27 der Glasstränge mittels eines weiteren Handrads 64 (siehe Fig. 2) eingestellt werden, indem die Scherenarme 8 und 9 zueinander verstellt werden.

Wenn, ausgehend von der in Fig. 1 für den Scherenarm 9 gezeigten geöffneten Arbeitsstellung, eine noch weitere Entfernung der Scherblätter 4 und 5 bzw. 6 und 7 voneinander gewünscht wird, z.B. um Arbeiten an den Tropfenauslässen oder sonstigen Teilen des Speiserkopfes 13 vorzunehmen, werden die Kolbenstangen 49, 50 in die Zylinder 51, 52 hineinbewegt und dadurch der Schlitten 41 von den Scherblättern 4 bis 7 weggeführt, wobei zuvor durch eine entsprechende Einstellung der Kurbeln 21 und 22 die Scherenarme 8, 9 in die geöffnete Arbeitsstellung gebracht worden sind. Mit dem Schlitten 41 bewegt sich auch die Antriebseinrichtung 29. Durch diese Schlittenbewegung wird eine maximal geöffnete Servicestellung 70 (siehe Fig. 1) der Scherenarme 8, 9 mit einer maximalen Entfernung der Scherblätter 4, 5 bzw. 6, 7 voneinander erreicht.

Sind die erforderlichen Arbeiten an der Vorrichtung 1 abgeschlossen, werden ausgehend von der Servicestellung 70 die Kolbenstangen 49, 50 wieder aus den Zylindern 51, 52 herausgefahren, wodurch die Scherenarme 8, 9 wieder in die geöffnete Arbeitsstellung gelangen.

Ähnliche Abläufe gelten für die vorerwähnte geöffnete Sicherheitsstellung der Scherenarme 8, 9.

In allen Zeichnungsfiguren sind gleiche Teile mit gleichen Bezugszahlen versehen.

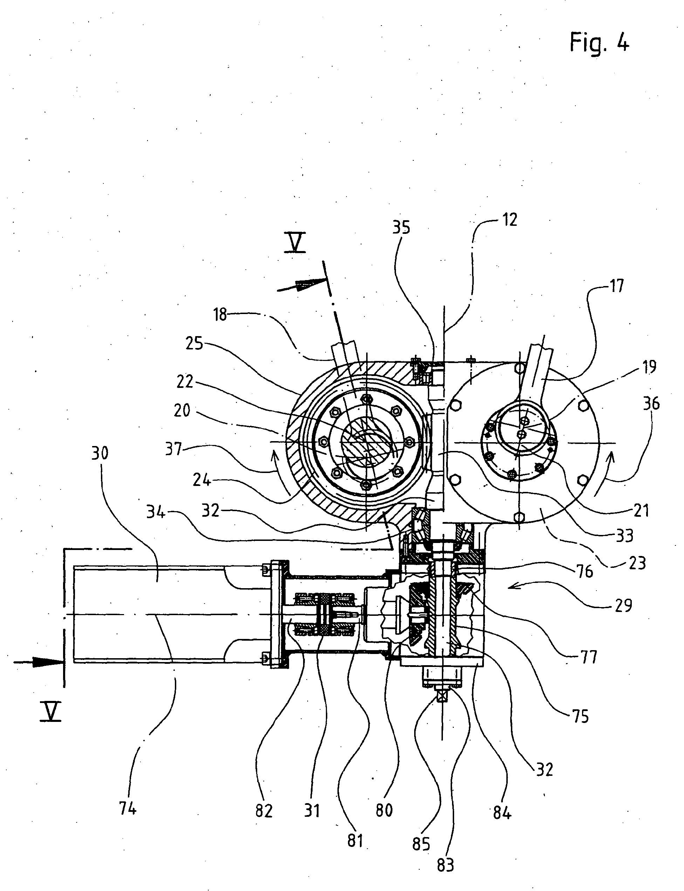

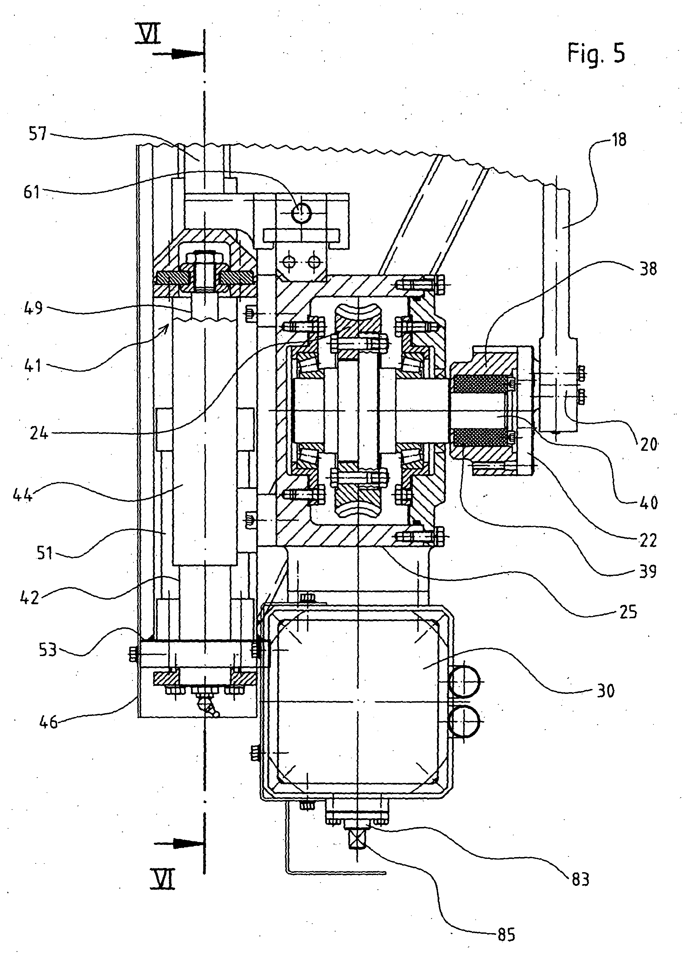

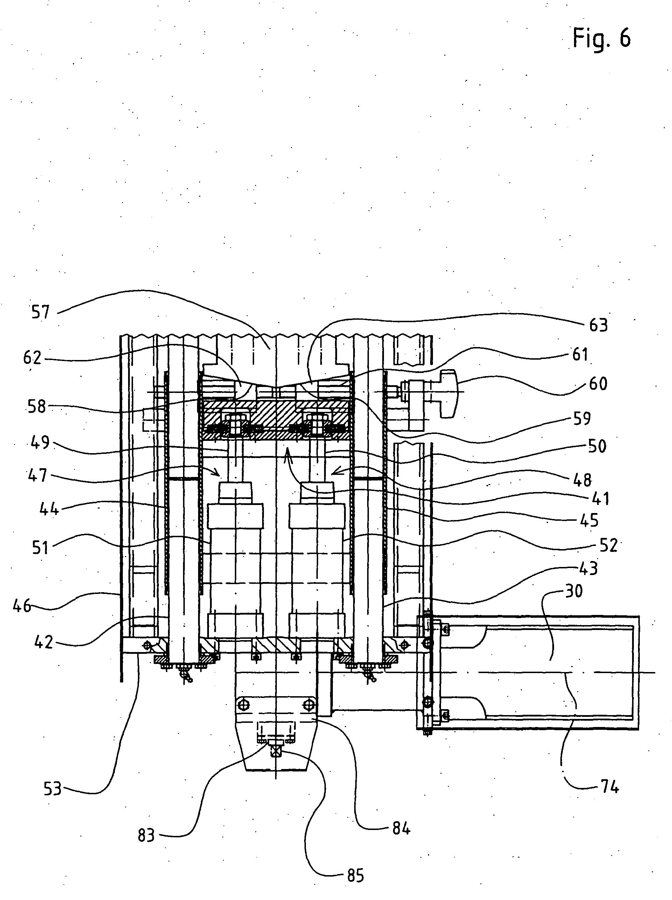

Die Ausführungsform der Vorrichtung gemäß den Fig. 4 bis 6 unterscheidet sich von der oben beschriebenen Ausführungsform im Wesentlichen nur dadurch, dass eine Längsachse 74 des Elektroservomotors 30 in einem rechten Winkel zu der Schneckenwelle 32 und der Ebene 12 angeordnet ist.

Auf der Schneckenwelle 32 ist eine Hohlwelle 75 mittels eines Spannsatzes 76 befestigt. Auf der Hohlwelle 75 ist ein erstes Kegelrad 77 festgelegt. In Eingriff mit dem ersten Kegelrad 77 steht ein zweites Kegelrad 80, das auf einer Antriebswelle 81 befestigt ist, welche über die Kupplung 31 mit einer Abtriebswelle 82 des Elektroservomotors 30 verbunden ist.

Die Schneckenwelle 32 besitzt eine Verlängerung 83, die sich durch ein Gehäuse 84 des Winkelgetriebes 77, 80 hindurch erstreckt und einen Vierkant 85 aufweist. Der Vierkant 85 dient dazu, die Scherenarme 8, 9 gegebenenfalls von Hand mit einer (nicht gezeichneten) Kurbel betätigen zu können.

## Patentansprüche

1. Vorrichtung (1) zum Abtrennen von Posten von einem oder mehreren Strängen aus schmelzflüssigem Glas,
bei der das Abtrennen jedes Postens durch ein Scherblattpaar (2,3) erfolgt,
wobei ein Scherblatt (4,5,6,7) jedes Scherblattpaars (2,3) an einem zugehörigen Scherenarm (8,9) angeordnet ist,
wobei beide Scherenarme (8,9) an einer gemeinsamen Säule (10) der Vorrichtung (1) frei schwenkbar gelagert sind,
wobei an jedem Scherenarm (8,9) im Abstand von der Längsachse (11) der Säule (10) eine Schubstange (17,18) angelenkt ist,
wobei jede Schubstange (17,18) andererseits an einem Kurbelzapfen (19, 20) einer zugehörigen Kurbel (21,22) angelenkt ist,
und wobei die beiden Kurbeln (21,22) durch eine Antriebseinrichtung (29) synchron zueinander und voneinander schwenkend antreibbar sind,
**dadurch gekennzeichnet, dass** jede Kurbel (21,22) koaxial mit einem Zahnrad (23,24) verbunden ist,
und dass die beiden Zahnräder (23,24) durch einen gemeinsamen Antrieb (30) der Antriebseinrichtung (29) gegensinnig drehend antreibbar sind.

2. Vorrichtung nach Anspruch 1,
**dadurch gekennzeichnet, dass** sie so ausgelegt ist, dass die Zahnräder mit gleichbleibender Drehrichtung und modulierter Drehgeschwindigkeit antreibbar sind.

3. Vorrichtung nach Anspruch 1 oder 2,
**dadurch gekennzeichnet, dass** die Zahnräder als Schneckenräder (23,24) ausgebildet sind,
und dass die Schneckenräder (23,24) im Eingriff mit einer gemeinsamen, durch den Antrieb (30) der Antriebseinrichtung (29) antreibbaren Schnecke (33) stehen.

4. Vorrichtung nach Anspruch 3,
**dadurch gekennzeichnet, dass** der Antrieb einen koaxial mit der Schnecke (33) angeordneten Elektroservomotor (30) aufweist.

5. Vorrichtung nach Anspruch 3,
**dadurch gekennzeichnet, dass** der Antrieb einen mit seiner Längsachse (74) unter einem Winkel zu der Schnecke (33) angeordneten und mit dieser über ein Winkelgetriebe (77,80) verbundenen Elektroservomotor (30) aufweist.

6. Vorrichtung nach Anspruch 5,
**dadurch gekennzeichnet, dass** eine Schneckenwelle (32) zu einer Seite hin eine Verlängerung (83) aufweist, die sich durch ein Gehäuse (84) des Winkelgetriebes (77,80) hindurch erstreckt und Mittel (85) zum Drehen von Hand aufweist.

7. Vorrichtung nach einem der vorhergehenden Ansprüche,
**dadurch gekennzeichnet, dass** der Antrieb (30) auf einem Schlitten (41), der zur Erzielung einer Schwenkung der Scherenarme (8,9) relativ zueinander verschiebbar ist, angeordnet ist.

8. Vorrichtung nach Anspruch 7,
**dadurch gekennzeichnet, dass** der Schlitten (41) in einer zu der Längsachse (11) der Säule (10) senkrechten Ebene entlang der in dieser Ebene liegenden Geraden, die die Längsachse (11) der Säule (10) und die Längsachse (26,27) des wenigstens einen Glasstrangs schneidet, verschiebbar ist.

9. Vorrichtung nach Anspruch 7 oder 8,
**dadurch gekennzeichnet, dass** der Schlitten (41) durch wenigstens eine Kolben-Zylinder-Einheit (47,48) verschiebbar ist, die einerseits an dem Schlitten (41) und andererseits vorrichtungsfest angeschlossen ist.

10. Vorrichtung nach einem der Ansprüche 7 bis 9,
**dadurch gekennzeichnet, dass** Mittel (57,61,62,63) zur Justierung einer Ruheposition des Schlittens (41) vorgesehen sind.

11. Vorrichtung nach Anspruch 10,
**dadurch gekennzeichnet, dass** die Justierungsmittel ein vorrichtungsfestes Konusstück (57), das in Richtung des Schlittens (41) konisch mit Flanken (58,59) ausgebildet ist, und keilförmige Klötze (62,63), die an den Flanken (58,59) des Konusstücks (57) anliegend mittels einer an dem Schlitten (41) befestigten Spindel (61) verschiebbar sind, aufweisen.
